# EUROPÄISCHE PATENTANMELDUNG

(11) **EP 1 967 055 A1**
(43) Veröffentlichungstag der Anmeldung: **10.09.2008**
(21) Anmeldenummer: 07103568.7
(22) Anmeldetag: 06.03.2007
(51) Int. Cl.: A01B 45/02

(54) **Bodenbearbeitungsvorrichtung**

(71) Anmelder: Redexim Handel-en Exploitatie Maatschappij B.V., 3702 AC Zeist (NL)
(72) Erfinder: de Bree, Cornelis Hermanus Maria, 3971 ND Driebergen (NL)
(74) Vertreter: Dallmeyer, Georg

(57) **Zusammenfassung**

Bei einer fahrbaren Bodenbearbeitungsvorrichtung, mit einem Maschinenrahmen (23), einem Antrieb für mindestens ein auf- und abbewegbares Stechwerkzeug (3), wobei das Stechwerkzeug (3) in den Boden (9) einstechbar und wieder herausziehbar ist, einem an dem Maschinenrahmen (23) beweglich geführten Führungselement für mindestens ein Stechwerkzeug (3), einem Werkzeughalter (2) für das Stechwerkzeug, der um eine erste Schwenkachse in dem von dem Antrieb auf- und abbewegbaren Führungselement gelagert ist, um während des Bodeneingriffs ein Verschwenken des Stechwerkzeugs (3) entgegen einer Federkraft zu ermöglichen, ist vorgesehen, dass koaxial zu der ersten Schwenkachse zwischen dem Werkzeughalter (2) und dem Führungselement ein Torsionselement angeordnet ist, das unter Krafteinwirkung auf das mindestens eine Stechwerkzeug (3) ein Verschwenken des Werkzeughalters (2) relativ zu dem Führungselement zulässt und bei Wegfall der Krafteinwirkung ein Rückstellmoment auf den Werkzeughalter (2) ausübt, so dass das Stechwerkzeug (3) nach dem Herausziehen aus dem Boden wieder in die Ausgangslage zurückschwenkt.

## Beschreibung

Die Erfindung betrifft eine fahrbare Bodenbearbeitungsvorrichtung zum Einbringen von Hohlräumen in den Boden nach dem Oberbegriff des Anspruchs 1.

Derartige Vorrichtungen dienen dazu, mit Hilfe von Stechwerkzeugen Hohlräume in einen Boden einzubringen, wobei in die tieferen Bereiche des Bodens schlitzförmige Hohlräume eingebracht werden und an der Bodenfläche möglichst kleine Löcher verbleiben. Die Hohlräume ermöglichen einen besseren Abfluss von Wasser und Verbessern die Bodenbelüftung und durch die Auflockerung des Bodens wird das Pflanzenwachstum, insbesondere von Gräsern, verbessert.

Die bislang für solche Zwecke verwendeten, aus der japanischen Offenlegungsschrift JP-A-55089538 bekannten Bodenbearbeitungsvorrichtungen besitzen zwei parallelogrammartig angeordnete Tragarme, die teleskopartig ausgebildet sind und denen jeweils eine Feder parallel geschaltet ist, so dass die Tragarme gegen Federkraft längenveränderlich sind. Die Tragarme sind am einen Ende an dem Maschinenrahmen und am anderen Ende an einem Werkzeughalter für Stechwerkzeuge angelenkt. Die Schubstange eines Kurbeltriebs ist am Werkzeughalter der Stechwerkzeuge angelenkt und treibt diesen an, so dass dieser mit den Stechwerkzeugen eine Auf- und Abbewegung ausführt. Beim Eindringen in den Boden können die Stechwerkzeuge durch Längenänderung der Tragarme entgegen der Fahrtrichtung der Bodenbearbeitungsvorrichtung verschwenkt werden.

Aus der Europäischen Offenlegungsschrift EP-A-0037595 ist eine weitere Bodenbearbeitungsvorrichtung bekannt, die zwei parallelogrammartig geführte Tragarme benutzt, die am einen Ende schwenkbar einen Werkzeughalter halten und die am anderen Ende am Maschinenrahmen schwenkbar gelagert sind. Die Schubstange des Kurbeltriebs ist an dem Werkzeughalter angelenkt und treibt diesen an, so dass dieser eine Auf- und Abbewegung ausführt. Einer der beiden Tragarme ist längenveränderlich und beinhaltet eine Anschlagfedereinrichtung. Solange sich das Stechwerkzeug außerhalb des Bodens befindet, liegt der Tragarm aufgrund der Federkraft an dem Anschlag an. Bei eingestochenem Stechwerkzeug und Vorwärtsbewegung der Bodenbearbeitungsvorrichtung verschwenkt das Stechwerkzeug mit dem Werkzeughalter entgegen der Fahrtrichtung und der längenveränderliche Tragarm wird gegen die Federkraft verlängert.

Die bisher bekannten Bodenbearbeitungsvorrichtungen sind aufwändige Konstruktionen mit vielen Maschinenteilen, die während des Stechvorgangs mitbewegt werden. Die Massenträgheit ist somit relativ hoch, so dass die Arbeitsgeschwindigkeit der Vorrichtungen begrenzt ist.

Der Erfindung liegt demzufolge die Aufgabe zugrunde, eine Vorrichtung der eingangs beschriebenen Art zu schaffen, bei der weniger Maschinenteile während des Stechvorgangs mitbewegt werden und somit die Arbeitsgeschwindigkeit erhöht werden kann.

Zur Lösung dieser Aufgabe dienen die Merkmale des Anspruchs 1.

Die Erfindung sieht in vorteilhafter Weise vor, dass eine Bodenbearbeitungsvorrichtung der einleitend beschriebenen Art einen Maschinenrahmen, mindestens ein auf- und abbewegbares Stechwerkzeug, wobei das Stechwerkzeug in den Boden einstechbar und wieder herausziehbar ist, mindestens einen Werkzeughalter für das Stechwerkzeug und mindestens ein Führungselement aufweist. Der Werkzeughalter ist um eine erste Schwenkachse in dem von einem Antrieb auf- und abbewegbaren Führungselement gelagert. Zwischen dem Werkzeughalter und dem Führungselement ist ein Torsionselement koaxial zur ersten Schwenkachse angeordnet. Bei eingestochenem Stechwerkzeug und Weiterbewegung kann das Stechwerkzeug und somit der Werkzeughalter gegenüber dem Führungselement verschwenkt werden. Bei Wegfall der Krafteinwirkung, d.h. sobald sich das Stechwerkzeug außerhalb des Bodens befindet, wird ein Rückstellmoment auf den Werkzeughalter erzeugt, so dass der Werkzeughalter mit dem Stechwerkzeug aufgrund des Torsionsmoments wieder in die Ausgangslage zurückschwenkt.

Diese Ausführungsform hat den Vorteil, dass weniger Maschinenteile während der Einstechbewegung bewegt werden müssen und somit die Massenträgheit geringer ist. Die Stechwerkzeuge können somit, insbesondere während sie sich im Eingriff mit dem Boden befinden, schneller entgegen der Fahrtrichtung nachgeben. Die in der Bodenoberfläche entstehenden Löcher können daher kleingehalten werden, so dass sie nicht wesentlich größer sind als der Durchmesser des Einstechwerkzeugs.

Ein weiterer Vorteil besteht darin, dass keine Anschläge benötigt werden, um die Stechwerkzeuge in die Ausgangsposition vor dem Einstechen zurückzubringen. Somit fällt die Stoßbelastung auf den Maschinenrahmen, die Maschinenelemente und insbesondere deren Lager weg. Somit kann die Lebensdauer, insbesondere der Lager aber auch der Maschinenteile erhöht werden. Desweiteren werden im Betrieb auftretende Vibrationen in erheblichem Umfang reduziert.

Ein zusätzlicher Vorteil ist, dass die Bodenbearbeitungsvorrichtung, da sie keinen Anschlag besitzt, nicht nur vorwärts, sondern auch rückwärts unter Eingriff der Stechwerkzeuge bewegt werden kann. Bei den zu bearbeitenden Flächen sind die Eckbereich der zu bearbeitenden Flächen mit einer Bodenbearbeitungsvorrichtung in der Regel nur schwer zugänglich. Aufgrund der möglichen Rückwärtsfahrt können die Ecken besser erreicht werden.

Das Torsionselement kann aus einem Elastomerelement, z. B. einem Gummifederelement oder einer schrauben- bzw. spiralförmigen Torsionsfeder, z. B. einer metallischen Torsionsfeder bestehen. Vorzugsweise ist das Torsionselement ein Verbundelement und besteht sowohl aus einem Elastomer- als auch aus einem Metallwerkstoff.

Bei der Verwendung eines Elastomers oder einer Kombination aus Elastomer und Metall als Torsionselement besteht ein weiterer Vorteil darin, dass geringere Vibrationen auf die gesamte Bodenbearbeitungsvorrichtung und auf das Zugfahrzeug übertragen werden. Somit können Schwingungseinwirkungen auf Personen, die die Bodenbearbeitungsvorrichtung bedienen, deutlich reduziert werden.

Bei einer weiteren Ausgestaltung der Erfindung ist vorgesehen, dass das Führungselement, an dem der Werkzeughalter schwenkbar gelagert ist, längs einer an dem Maschinenrahmen befestigten Führung geführt ist. Diese Führung kann linear oder aber insbesondere im oberen Bereich gebogen ausgeführt sein, damit die von dem Kurbeltrieb auf die Führung ausgeübten Kräfte reduziert werden.

Der Winkel der Führung in einer zur Fahrtrichtung parallelen vertikalen Ebene kann relativ zum Maschinenrahmen einzeln oder zentral verstellt werden und es kann somit der Einstechwinkel der Stechwerkzeuge in den Boden eingestellt werden. Dies hat gegenüber dem bisherigen Stand der Technik den Vorteil, dass der Einstechwinkel ohne Verwendung eines Anschlags zentral verstellt werden kann, wenn alle Führungen der Führungselemente und somit der Stechwerkzeuge gemeinsam verstellt werden.

Bei weiteren Ausführungsbeispielen der Erfindung ist vorgesehen, dass bei der Bodenbearbeitungsvorrichtung mehrere Stechwerkzeuge oder mehrere Gruppen von Stechwerkzeugen nebeneinander angeordnet sind und diese zueinander phasenverschoben antreibbar sind.

Auch können diese Stechwerkzeuge oder Gruppen von Stechwerkzeugen in mindestens zwei Reihen in Fahrtrichtung hintereinander angeordnet sein. Es können mindestens zwei in Fahrtrichtung hintereinanderliegende Stechwerkzeuge oder Gruppen von Stechwerkzeugen mit dem gleichen Kurbeltrieb angetrieben werden, wobei diese Stechwerkzeuge bzw. Gruppen von Stechwerkzeugen vorzugsweise phasenverschoben angetrieben werden. Der Kurbeltrieb ist dabei so mit der Fahrgeschwindigkeit synchronisiert, dass die Stechwerkzeuge der beiden Reihen einen solchen Weg während der Phase, in der die Stechwerkzeuge nicht im Eingriff mit dem Boden sind, zurücklegen, dass die Stechwerkzeuge der zweiten Reihe in Fahrtrichtung vor den Löchern, die von den Stechwerkzeugen der ersten Reihe erzeugt worden sind, in den Boden einstechbar sind.

Dies hat den Vorteil, dass bei mehreren Reihen von hintereinander angeordneten Stechwerkzeugen die Arbeitsgeschwindigkeit der Bodenbearbeitungsvorrichtung erhöht werden kann.

Bei einer alternativen Ausführungsform der Erfindung können am Maschinenrahmen befestigte Anschläge vorgesehen sein, die zentral oder einzeln verstellt werden können und die Rückstellbewegung der Stechwerkzeuge begrenzen, um den Einstechwinkel zu verändern.

Bei einem weiteren Ausführungsbeispiel kann das Führungselement aus einem Tragarm bestehen, der an dem Maschinenrahmen schwenkbar befestigt ist. In diesem Fall kann bei einem Werkzeughalter ein schwenkbar gelagerter Kopplungsarm vorgesehen sein, der vor dem Einstechen in den Boden mit dem Anschlag in direktem Kontakt ist und an dem Werkzeughalter entfernten Ende an einem Zwischenelement schwenkbar gelagert ist, das seinerseits an dem Maschinenrahmen schwenkbar gelagert ist.

Bei einem weiteren Ausführungsbeispiel der Erfindung ist das Führungselement zweiteilig ausgebildet, wobei die beiden Teile des Führungselements in der gleichen Führung geführt werden. Zwischen dem oberen und dem unteren Führungselement ist mindestens eine Druckfeder angeordnet, die ein Einfedern des mindestens einen Stechwerkzeuges bei einem außergewöhnlich hohen Bodeneinstechwiderstand ermöglicht. Diese Feder soll eine hohe Federsteifigkeit besitzen und erst ab einer bestimmten Kraft einfedern. Bei normalen Bodenverhältnissen kann das Stechwerkzeug die vorgegebene Bewegung ungehindert ausführen, da die Federkraft der Druckfeder größer ist als der Bodeneinstechwiderstand üblicherweise bearbeiteter Böden ist. Dies hat den Vorteil, dass die Bodenbearbeitungsvorrichtung auch benutzt werden kann, wenn sich Steine oder Schotter im Boden befinden. Bei den bisher bekannten Bodenbearbeitungsvorrichtungen können die Stechwerkzeuge bzw. Maschinenelemente beschädigt werden, wenn die Stechwerkzeuge auf Steine oder Ähnliches treffen. Die Bodenbearbeitungsvorrichtung der vorliegenden Ausführungsform kann somit auch zum Bearbeiten von Skipisten verwendet werden, bei denen sich sehr häufig Steine oder Felsen unter der Schneedecke befinden.

Eine Weiterbildung der Erfindung kann vorsehen, dass die Höhe des Hubes, den das Führungselement und somit der Werkzeughalter ausführen, eingestellt werden kann. Die Verstellung lässt sich z. B. erreichen, indem der Abstand des Hubzapfens, der die Kurbeistange aufnimmt, zur Drehachse der Kurbelwelle verändert werden kann. In den Wangen, die die Hubzapfen mit den Kurbelwellenzapfen verbinden, befinden sich Langlöcher. Die Hubzapfen können innerhalb der Langlöcher verschoben werden und an unterschiedlichen Positionen befestigt werden.

Bei einer bevorzugten Ausführung kann alternativ die Höhe des Hubs verstellt werden, indem der Abstand zwischen Kurbelwelle und Führungselement, an dem der Werkzeughalter schwenkbar gelagert ist, verändert wird. Dies geschieht beispielsweise dadurch, dass eine andere horizontale Position des Führungselements relativ zur Kurbelwelle eingestellt wird.

Dieser horizontale Abstand kann ebenfalls einzeln oder zentral für mehrere nebeneinander angeordnete Stechwerkzeuge eingestellt werden. Ein Vorteil davon ist, dass die Werkzeuge nicht gewechselt werden müssen, wenn die Tiefe der in den Boden eingebrachten Hohlräume verändert werden soll.

Im Folgenden werden unter Bezugnahme auf die Zeichnungen Ausführungsbeispiele der Erfindung näher erläutert.

Es zeigen schamatisch:
- Fig. 1: eine Seitenansicht auf eine Bodenbearbeitungsvorrichtung,
- Fig. 2a: eine teilweise geschnittene Frontansicht auf ein erfindungsgemäßes Ausführungsbeispiel eines Stechwerkzeuges,
- Fig. 2b: eine Seitenansicht auf das Ausführungsbeispiel aus Fig. 2a
- Fig. 2c: eine teilweise geschnittene Frontansicht auf eine Variante des Ausführungsbeispiels aus Fig. 2a
- Fig. 3: eine Frontansicht eines weiteren Ausführungsbeispiels mit einem Elastomerelement als Torsionsfiederelement, für ein Stechwerkzeug,
- Fig. 4: eine Seitenansicht eines weiteren Ausführungsbeispiels, bei dem eine spiral- bzw. schraubenförmige Torsionsfeder als Torsionselement verwendet ist,
- Fig. 5: eine Seitenansicht des ersten Ausführungsbeispiels mit einer schwenkbaren linearen Führung des Führungselementes,
- Fig. 6: eine Seitenansicht eines Ausführungsbeispiels mit eingestochenem Stechwerkzeug,
- Fig. 7: eine Seitenansicht eines weiteren Ausführungsbeispiels mit insbesondere im oberen Teil gebogener Führung,
- Fig. 8: eine Seitenansicht eines weiteren Ausführungsbeispiels mit veränderlichem Kreisbahndurchmesser des Kurbeltriebs,
- Fig. 9: eine Seitenansicht eines weiteren Ausführungsbeispiels mit zwei Reihen hintereinander angeordneten Stechwerkzeugen bzw. Gruppen von Stechwerkzeugen,
- Fig. 10: eine Frontansicht eines weiteren Ausführungsbeispiels, bei dem das Stechwerkzeug bei außergewöhnlich hohem Bodenwiderstand einfedern kann,
- Fig. 11: eine Frontansicht des Ausführungsbeispiels aus Fig. 10, bei dem das Stechwerkzeug eingefedert ist,
- Fig. 12: eine Seitenansicht eines weiteren Ausführungsbeispiels mit Tragarm,
- Fig. 13: eine Seitenansicht eines weiteren Ausführungsbeispiels mit Tragarm und Anschlag.

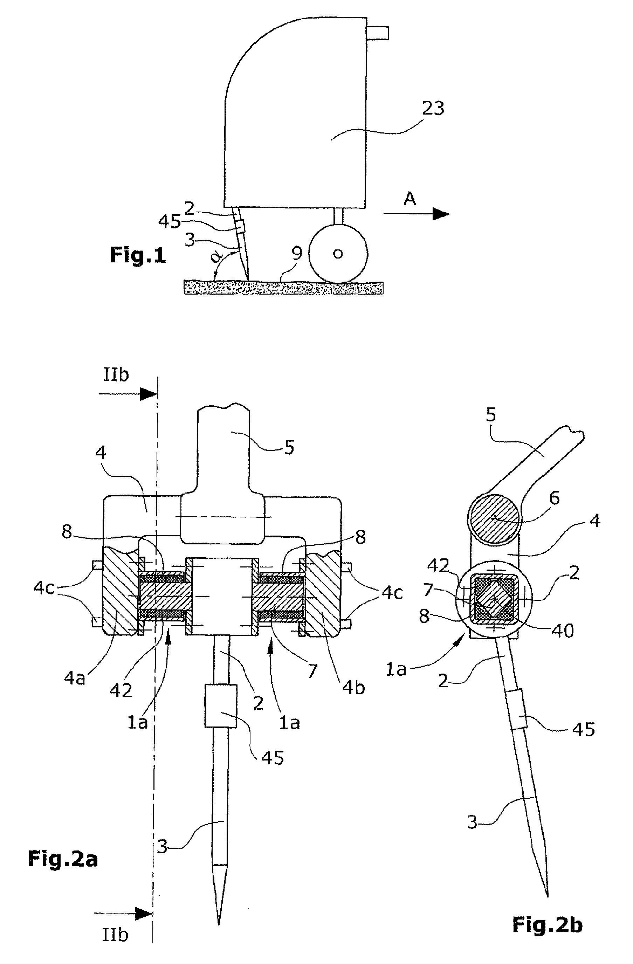

Fig. 1 zeigt eine Seitenansicht einer fahrbaren Bodenbearbeitungsvorrichtung, die selbstfahrend ist oder mit Hilfe einer Zugmaschine gezogen werden kann. Diese Bodenbearbeitungsvorrichtung weist einen Maschinenrahmen 23 auf, in dem mehrere auf und ab bewegbare Stechwerkzeuge 3 schwenkbar gelagert sind. Die Stechwerkzeuge 3 werden abwechselnd in den Boden 9 eingedrückt und führen in dem Boden 9 aufgrund der Vorwärtsbewegung der Bodenbearbeitungsvorrichtung eine Kippbewegung aus, bei der der Boden 9 unterhalb des Einstechlochs aufgebrochen wird, wodurch beispielsweise die Drainage des Bodens 9 verbessert wird. Dabei soll das Einstechloch trotz der Fahrgeschwindigkeit der Bodenbearbeitungsvorrichtung möglichst klein bleiben.

Die Stechwerkzeuge 3 werden vorzugsweise mit Hilfe einer Haltevorrichtung 45 an einem Werkzeughalter 2 befestigt. Stechwerkzeuge unterschiedlicher Länge und Form sowie Durchmesser können an dem Werkzeughalter 2 befestigt werden, der von einem Führungselement 4 geführt wird. Das Führungselement 4 führt vorzugsweise durch einen Kurbeltrieb 17 angetrieben eine Auf- und Abbewegung aus. Alternativ ist es auch möglich, das Führungselement 4 hydraulisch oder elektrisch anzutreiben.

An dem Führungselement 4 ist der Werkzeughalter 2 um eine Schwenkachse 40 schwenkbar gelagert, wobei der Werkzeughalter 2 ein Stechwerkzeug 3 oder eine Gruppe von Stechwerkzeugen 3 aufnimmt, die aufgrund der Auf- und Abbewegung in den Boden 9 einstechbar und wieder herausziehbar sind. Es können mehrere vorzugsweise nebeneinander angeordnete Stechwerkzeuge 3 oder nebeneinander angeordnete Gruppen von Stechwerkzeugen 3 angetrieben werden. Die Stechwerkzeuge bzw. Gruppen von Stechwerkzeugen werden bevorzugt phasenverschoben angetrieben.

Fig. 2a zeigt eine Frontansicht und Fig. 2b eine Seitenansicht auf ein Führungselement 4 mit Werkzeughalter 2 und Stechwerkzeug 3. Eine Schubstange 5 wird mit Hilfe eines Kurbeltriebs 17 angetrieben. Die Schubstange 5 ist mit einem ersten Schwenklager 6 mit dem Führungselement 4 gekoppelt. Das Führungselement 4 kann durch die Schubstange 5 angetrieben eine Auf- und Abbewegung längs einer Führung 11 ausführen. An dem Führungselement 4 ist der Werkzeughalter 2 um eine Schwenkachse 40 schwenkbar gelagert. An dem Werkzeughalter 2 ist mindestens ein Stechwerkzeug 3 angebracht. Zwischen dem Werkzeughalter 2 und dem Führungselement 4 ist ein zur Schwenkachse 40 koaxial wirkendes Torsionselement 1a angebracht. Das Führungselement 4 nimmt den Werkzeughalter 2 vorzugsweise zwischen zwei Armen 4a, 4b auf, die mit Hilfe von seitlichen Führungszapfen 4c in der Führung 11 geführt sind.

Vor dem Einstechen ist das Torsionselement unbelastet, wobei in der Ausgangslage kurz vor dem Einstechen ein vorbestimmter Einstechwinkel des Stechwerkzeuges 3 eingestellt ist. Das Torsionselement lässt unter Krafteinwirkung auf das Stechwerkzeug 3, d.h. bei eingestochenem Stechwerkzeug 3 und Weiterbewegung der Bodenbearbeitungsvorrichtung in Fahrtrichtung A, ein Verschwenken des Stechwerkzeuges 3 entgegen der Fahrtrichtung zu. Bei Wegfall der Krafteinwirkung, d.h. nach dem Herausziehen des Stechwerkzeuges 3 aus dem Boden 9, übt das Torsionselement ein Rückstellmoment auf den Werkzeughalter 2 aus, so dass das Stechwerkzeug 3 nach dem Herausziehen wieder in die Ausgangslage zurückschwenkt.

Das Torsionselement in Fig. 2a und 2b kann ein Metall-Elastomer-Verbundelement 1a sein, wie es beispielsweise von der Firma Rosta erhältlich ist. Das Elastomer-Metall-Verbundelement weist ein Gehäuse 8 auf, das vorzugsweise aus einem viereckigen bzw. dreieckigen Hohlprofil besteht. Weiter weist das Elastomer-Metall-Verbundelement eine zentrale Stange 7 auf, die sich im Inneren des Gehäuses 8 befindet und ebenfalls vorzugsweise einen viereckigen bzw. dreieckigen Querschnitt besitzt. Alternativ kann sowohl bei dem Gehäuse 8 als auch bei der Stange 7 ein allgemein polygoner Querschnitt verwendet werden.

Beispielsweise bei im wesentlichen quadratischen Profilen des Gehäuses 8 und der Stange 7 ist die Stange 7 gegenüber dem Gehäuse 8 um einen Drehwinkel von 45° versetzt angeordnet. Zwischen dem Gehäuse 8 und der Stange 7 sind Elastomerelemente 42 in den Ecken des Gehäuses 8 angeordnet und erstrecken sich im Wesentlichen über die gesamte Länge des Gehäuses 8 und der Stange 7. Unter Einwirkung eines Drehmomentes kann die Stange 7 gegenüber dem Gehäuse 8 verdreht werden. Dabei werden die Elastomerelemente 42 komprimiert und es entsteht ein elastisches Rückstellmoment. Bei einer im Querschnitt dreieckigen Form des Gehäuses 8 und der Stange 7 kann ein größerer Torsionswinkel genutzt werden.

In Fig. 2a und Fig. 2b ist die Stange 7 mit dem Werkzeughalter 2 und das Gehäuse 8 mit dem Führungselement 4 drehfest verbunden.

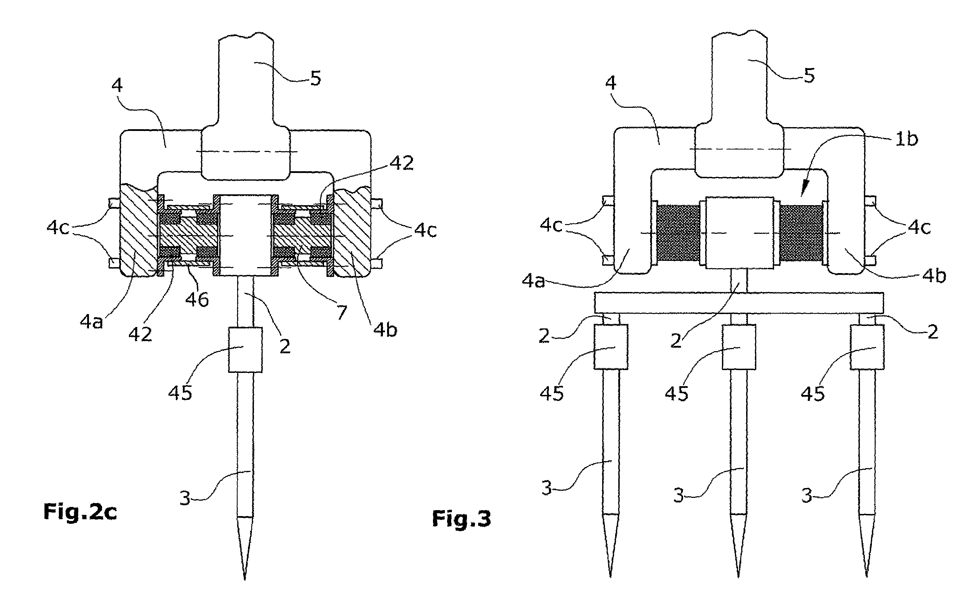

In Fig. 2c sind zwei miteinander gekoppelte Elastomer-Metall-Verbundelemente 1a nebeneinander angeordnet, um einen größeren Torsionswinkel zu erreichen. Die beiden Stangen 7 sind fest verbunden oder vorzugsweise einstückig ausgebildet. Eines der beiden Gehäuse 8 ist am Führungselement 4 und das andere Gehäuse 8 am Werkzeughalter 2 befestigt. Um vertikale Kräfte besser aufnehmen zu können, kann eine Hülse 46 vorgesehen sein, die die beiden Gehäuse 8 umschließt.

Alternativ können auch die beiden Gehäuse 8 anstatt der Stange 7 fest miteinander verbunden sein oder vorzugsweise einstückig, sowie die Stange 7 zweiteilig ausgebildet sein. In diesem Fall ist eine der Stangen 7 mit dem Führungselement 4 und die andere Stange 7 mit dem Werkzeughalter 2 drehfest verbunden.

Der Einstechwinkel des Stechwerkzeuges 3 in den Boden entspricht dem Winkel α zwischen Stechwerkzeug 3 und der Bodenoberfläche 9. Dieser Winkel kann verändert werden, indem der Winkel des Werkzeughalters 2 bezüglich einer orthogonalen Ebene quer zur Fahrtrichtung verändert wird.

In Fig. 3 ist ein weiteres Ausführungsbeispiel dargestellt, bei dem ein Elastomerelement 1b als Torsionselement verwendet wird. In diesem Ausführungsbeispiel sind die Elastomerelemente beidseitig quer zur Fahrtrichtung zwischen dem Werkzeughalter 2 und dem Führungselement 4 angeordnet. An dem Werkzeughalter 2 können mehrere Stechwerkzeuge 3 befestigt sein. Die Enden der Elastomerelemente sind direkt am Führungselement 4 bzw. am Werkzeughalter 2 befestigt.

Die Elastomerelemente können an den Enden als Verbundelemente z.B. anvulkanisierte Anschlussflansche 10 aufweisen, die können ihrerseits am Werkzeughalter 2 bzw. am Führungselement 4 befestigt sein. Der Einstechwinkel α kann auch dadurch verändert werden, indem der Winkel zwischen den Einstechwerkzeugen und dem Werkzeughalter 2 beim Befestigen der Einstechwerkzeuge verändert wird.

Der maximal mögliche Torsionswinkel zwischen dem Führungselement 4 und dem Werkzeughalter 2 ist von der Länge L der Elastomerelemente 1b abhängig. Je länger das Elastomerelement 1b ist, desto größer kann der Torsionswinkel sein. Zum Verstärken des Elastomerelementes 1b kann parallel zu seiner Längserstreckung im Inneren ein vorzugsweise koaxialer Metallbolzen eingebracht sein. Dieser kann an den angrenzenden Anschlussflanschen 10 oder am Werkzeughalter 2 und/oder am Führungselement 4 drehbar gelagert sein.

Auch ist ein Verbundelement aus Elastomerelementen und spiral- bzw. schraubenförmigen Metalltorsionsfedern möglich. Die Metallfedern sind in diesem Fall vom Elastomermaterial umschlossen. Auch hier können zur Verstärkung Metallbolzen im Inneren vorzugsweise koaxial eingebracht sein.

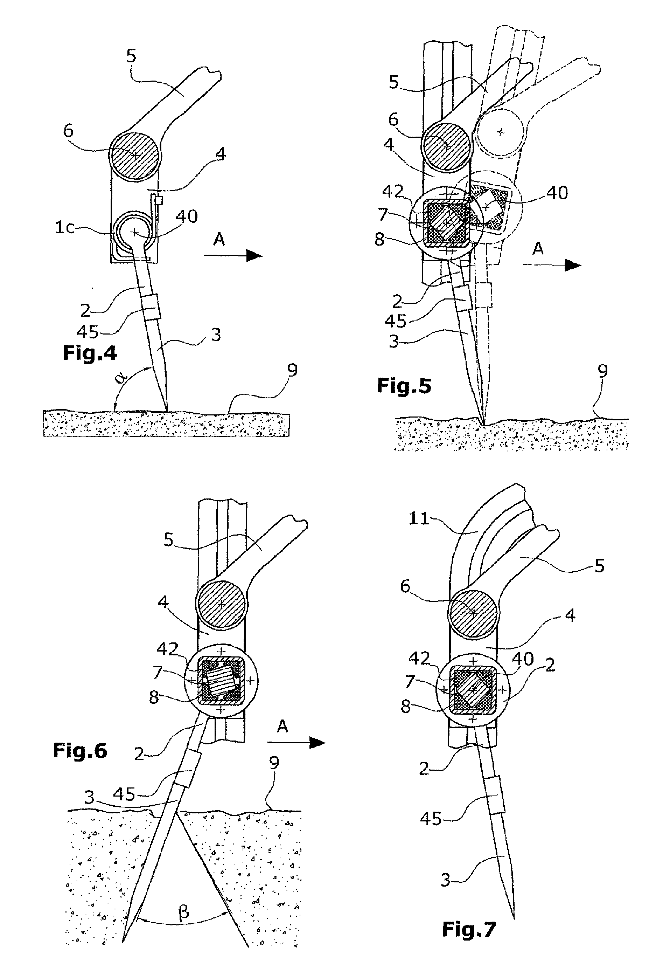

Die Seitenansicht in Fig. 4 zeigt die gleiche Ausführungsform wie sie in Fig.2a und 2b dargestellt ist, mit dem Unterschied, dass das Torsionselement eine koaxial zur Schwenkachse 40 verlaufende spiral- bzw. schraubenförmige Metalltorsionsfeder 1c ist. Die eine Seite der Metallfeder ist mit dem Führungselement 4 und die andere Seite ist mit dem Werkzeughalter 2 drehfest verbunden. Es ist hier auch möglich zur Verstärkung ein koaxiales achsen- oder hülsenförmiges Stützelement zu verwenden. Diese Stützelemente können dann ebenfalls am Werkzeughalter und am Führungselement drehbar gelagert sein.

Die Seitenansicht in Fig. 5 zeigt eine der Führungen 11, die das Führungselement 4 seitlich beidseitig führen. Die mindestens eine Führung 11 ist an dem in Fig. 5 nicht dargestellten Maschinenrahmen 23 befestigt. Die Führung 11 ist in einer zur Fahrtrichtung parallelen Vertikalebene kippbar (gestrichelte Zeichnung), so dass der Winkel der Führung 11 relativ zum Maschinenrahmen 23 verstellt werden kann. Damit wird auch der Einstechwinkel α der Stechwerkzeuge 3 in der Vertikalebene verstellt. Die Winkel mehrerer quer zur Fahrtrichtung nebeneinander in einer Reihe angeordneten Führungen 11 können zentral mit Hilfe einer Verstelleinrichtung verstellbar sein. Somit sind auch die Einstechwinkel der Stechwerkzeuge bzw. Gruppen von Stechwerkzeugen, die sich in einer Reihe befinden, zentral verstellbar.

Die nebeneinander angeordneten Stechwerkzeuge oder Gruppen von Stechwerkzeugen sind phasenverschoben antreibbar. Die Führungen 11 können auch horizontal parallel zur Fahrtrichtung verschiebbar sein, so dass der Hub der Auf- und Abbewegung aufgrund des veränderten Abstandes zum Kurbeltrieb 17 verstellbar ist. In der Fig. 5 ist das Stechwerkzeug kurz vor dem Einstechen in den Boden 9 dargestellt.

Fig. 6 zeigt die gleiche Seitenansicht wie Fig. 5 mit dem Unterschied, dass sich die Bodenbearbeitungsvorrichtung in Fahrtrichtung weiterbewegt hat. Das Stechwerkzeug 3 befindet sich im Boden 9 und ist aufgrund der Vorwärtsfahrt verschwenkt worden. Das Stechwerkzeug 3 hat dabei bisher eine Schwenkbewegung um einen Winkel β ausgeführt.

Fig. 7 zeigt eine Seitenansicht, bei der eine insbesondere im oberen Bereich gebogene Führung 11 gezeigt wird. Die Führung 11 ist in Richtung des Kurbeltriebes 17 gebogen, so dass der Winkel der Krafteinwirkung, die von der Schubstange 5 über das Führungselement 4 auf die Führung 11 ausgeübt wird, so verändert wird, dass die Belastung der Führung 11 durch Querkräfte verringert wird. Auf diese Weise wird der Verschleiß und die Reibung reduziert.

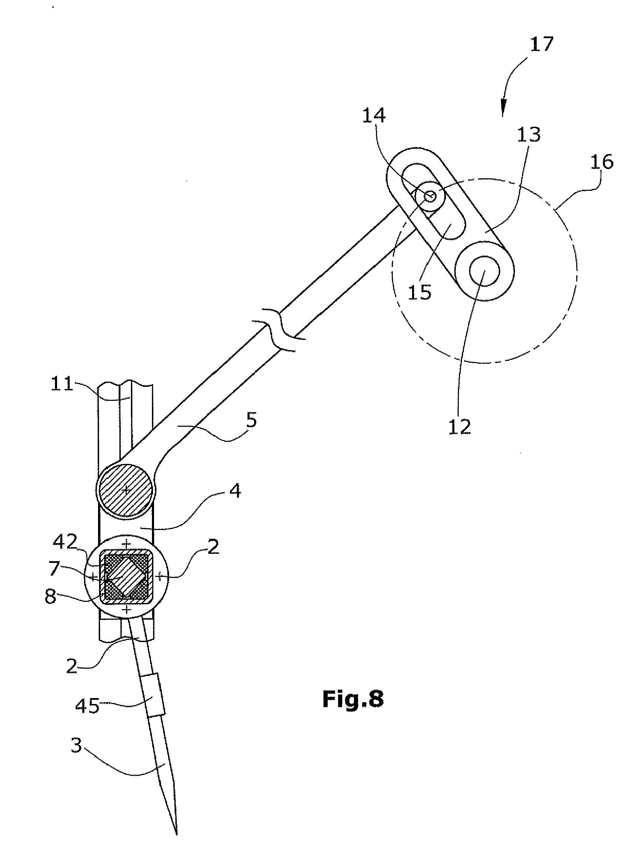

Fig. 8 zeigt eine Seitenansicht eines Ausführungsbeispiels mit linearer Führung 11. Die Wangen 13 des Kurbeltriebs 17 verbinden Hubzapfen 14 mit einer Kurbelwelle 12. Die Hubzapfen 14 nehmen die Schubstange 5 auf. Die Wangen 13 sind bei diesem Ausführungsbeispiel mit Langlöchern 15 versehen, so dass der wirksame Radius um die Drehachse der Kurbelwelle 12 verändert werden kann. Hierzu kann das kurbeltriebseitige Ende der Schubstange 5 in unterschiedlichen radialen Positionen befestigt werden. Durch die Veränderung des wirksamen Radiusses kann der Hub der Auf- und Abbewegung der Führungselemente 4 verändert werden. Die Kreisbahn, die der Hubzapfen 14 um die Kurbelwelle 12 ausführt, ist durch die Kreisbahn 16 gekennzeichnet.

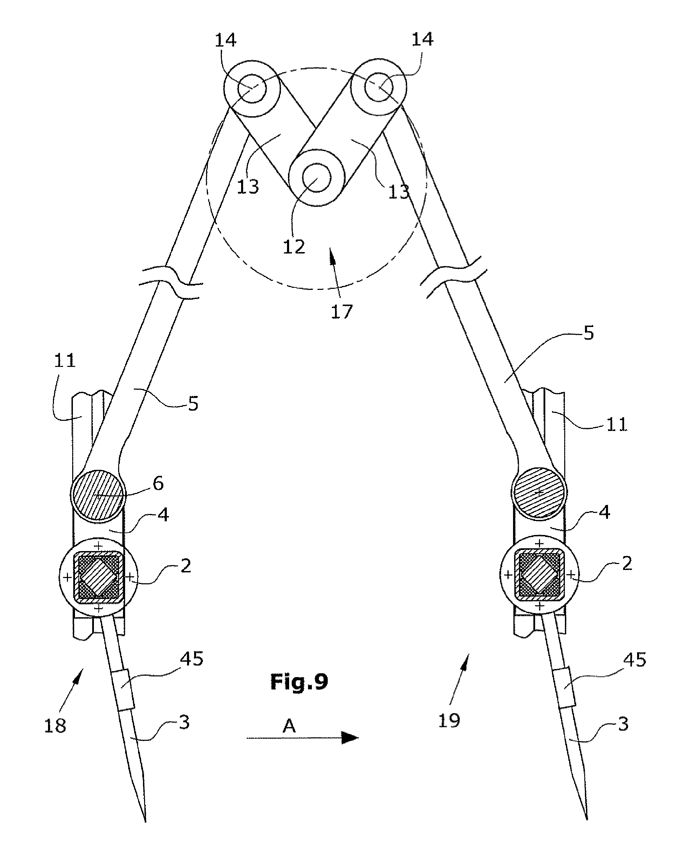

Fig. 9 zeigt eine Seitenansicht, in der zwei Reihen 18 und 19 von Stechwerkzeugen bzw. Gruppen von Stechwerkzeugen zu sehen sind, die in Fahrtrichtung hintereinander angeordnet sind, die von einem gemeinsamen Kurbeltrieb 17 angetrieben werden.

An dem Kurbeltrieb 17 nehmen zwei vorzugsweise winkelmäßig versetzte Hubzapfen 14 jeweils eine Schubstange 5 auf. Die Stechwerkezuge 3 in den Reihen 18 und 19 werden vorzugsweise phasenverschoben angetrieben. Der Kurbeltrieb 17 kann dabei so mit der Fahrgeschwindigkeit gekoppelt sein, dass die von den Stechwerkzeuge 3 der in Fahrtrichtung hinteren Reihe 18 erzeugten Löcher vor den zuvor erzeugten Löchern der Stechwerkzeuge 3 der ersten Reihe 19 liegen.

In den Fig. 4 bis 9 wurde jeweils das Elastomer-Metallverbundselement 1a des ersten Ausführungsbeispiels gezeigt. Alternativ ist es auch möglich, die beschriebenen alternativen Torsionselemente in allen Ausführungsbeispielen zu verwenden.

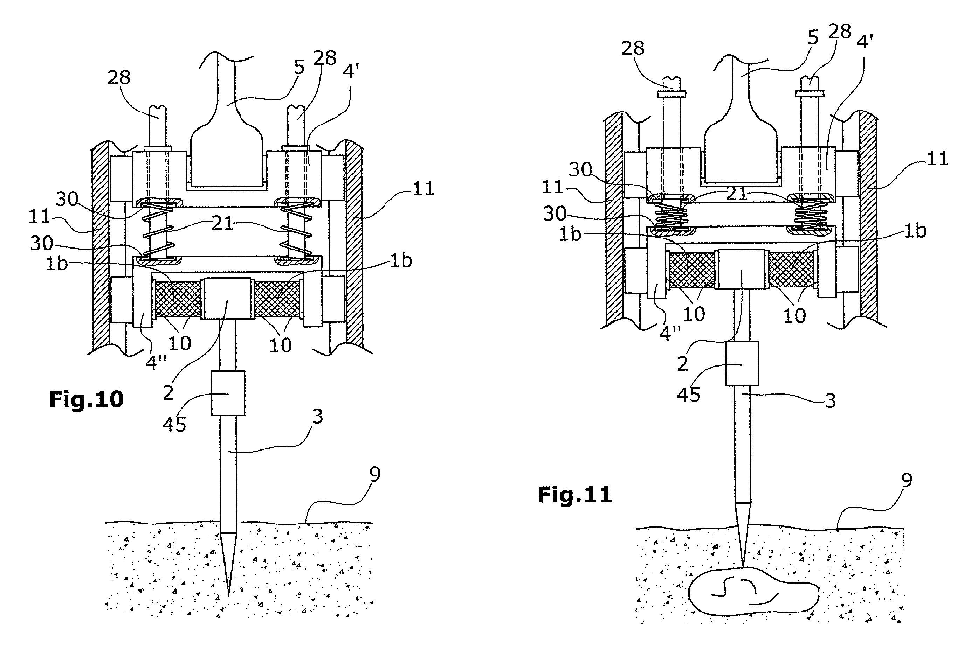

Die Fig. 10 zeigt die Frontansicht eines weiteren Ausführungsbeispiels, bei dem das Führungselement 4 zweiteilig ausgebildet, wobei die beiden Teile des Führungselements 4', 4" in der gleichen Führung geführt werden. Zwischen dem oberen 4' und dem unteren 4" Führungselement ist mindestens eine Druckfeder 21 angeordnet. Die beiden Teile des Führungselements 4', 4" sind aufgrund der Federn 21 gegeneinander vorgespannt, wobei Stäbe 28 den von den Federn 21 bewirkten Abstand zwischen den beiden Teilen des Führungselements 4', 4" begrenzen und die Federn vorspannen. Diese Stäbe 28 sind vorzugsweise koaxial zu den Federn 21 angeordnet und dienen dabei auch als Führungselemente für die Federn 21. Die Federn 21 besitzen eine hohe Federsteifigkeit. In den beiden Teilen des Führungselements 4', 4" können Einbuchtungen 30 vorgesehen sein, um eine Feder 21 aufzunehmen. An dem Führungselement 4' ist die Schubstange 5 schwenkbar gelagert.

In Fig. 10 ist das Stechwerkzeug 3 im eingestochenen Zustand gezeichnet. Dieses Ausführungsbeispiel hat den Vorteil, dass wenn ein unüblich hoher Widerstand im Boden auftritt, d.h. wenn z.B. das Stechwerkzeug auf einen Stein trifft, die Federn 21 wie aus Fig. 11 ersichtlich einfedern können. Auf diese Weise werden Beschädigungen der Maschine oder des Werkzeuges verhindert. Die Federn besitzen eine hohe Federsteifigkeit, so dass sie erst ab einer relativ hohen Krafteinwirkung einfedern, nämlich wenn der Bodeneinstechwiderstand ein übliches Maß erheblich überschreitet.

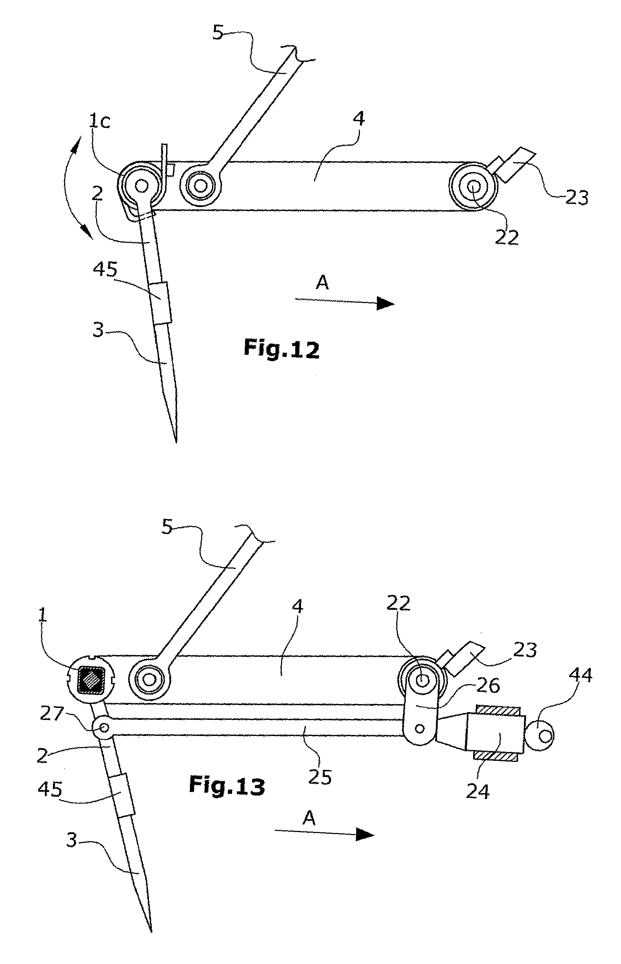

In Fig. 12 ist ein Ausführungsbeispiel mit Tragarmen 4 dargestellt. In diesem Fall besteht das Führungselement 4 aus mindestens einem Tragarm 4, der schwenkbar in einem Schwenklager 22 am Maschinenrahmen 23 befestigt ist. Der Einstechwinkel kann am Werkzeughalter 2 verstellt werden, indem der Werkzeughalter 2 in einer anderen Winkelstellung relativ zum Tragarm 4 befestigt wird.

Fig. 13 zeigt ein abgewandeltes Ausführungsbeispiel der Fig. 12, bei dem zusätzlich ein Kopplungsarm 25 an dem Werkzeughalter 2 zum zentralen Verstellen des Einstechwinkels schwenkbar gelagert ist, der vor dem Einstechen in den Boden mit dem Anschlag 24 in direktem Kontakt ist und der an dem von dem Werkzeughalter entfernten Ende schwenkbar an dem Zwischenelement 26 gelagert ist, das seinerseits schwenkbar an dem Maschinenrahmen 23 gelagert ist. Der Anschlag 24 kann beispielsweise mit einer exzentrisch gelagerten Stange 44 zentral verstellt werden. Der Anschlag 24 begrenzt die Rückstellbewegung der Stechwerkzeuge 3 zurück in die Ausgangslage. Somit kann der Einstechwinkel der Stechwerkzeuge 3 zentral verstellt werden. Alternativ kann der Einstechwinkel auch einzeln verstellt werden, indem die Anschlageinrichtung direkt auf dem Tragarm 4 befestigt wird.

## Patentansprüche

1. Fahrbare Bodenbearbeitungsvorrichtung, mit
- einem Maschinenrahmen (23),
- einem Antrieb für mindestens ein auf- und abbewegbares Stechwerkzeug (3), wobei das Stechwerkzeug (3) in den Boden einstechbar und wieder herausziehbar ist,
- einem an dem Maschinenrahmen (23) beweglich geführten Führungselement (4) für mindestens ein Stechwerkzeug (3),
- einem Werkzeughalter (2) für das Stechwerkzeug (3), der um eine erste Schwenkachse (40) in dem von dem Antrieb auf- und abbewegbaren Führungselement (4) gelagert ist, um während des Bodeneingriffs ein Verschwenken des Stechwerkzeugs (3) entgegen einer Federkraft zu ermöglichen,
**dadurch gekennzeichnet,**
**dass** koaxial zu der ersten Schwenkachse (40) zwischen dem Werkzeughalter (2) und dem Führungselement (4) ein Torsionselement (1a, 1b, 1c) angeordnet ist, das unter Krafteinwirkung auf das mindestens eine Stechwerkzeug (3) ein Verschwenken des Werkzeughalters (2) relativ zu dem Führungselement (4) zulässt und bei Wegfall der Krafteinwirkung ein Rückstellmoment auf den Werkzeughalter (2) ausübt, so dass das Stechwerkzeug (3) nach dem Herausziehen aus dem Boden wieder in die Ausgangslage zurückschwenkt.

2. Bodenbearbeitungsvorrichtung nach Anspruch 1, **dadurch gekennzeichnet, dass** das Torsionselement aus mindestens einem Elastomerelement oder einem lwlastomer-Metall-Verbundelement (1a, 1b) besteht, das an dem einen axialen Ende mit dem Führungselement (4) und an dem anderen axialen Ende mit dem Werkzeughalter (2) drehfest verbunden ist.

3. Bodenbearbeitungsvorrichtung nach Anspruch 1, **dadurch gekennzeichnet, dass** das Torsionselement eine schrauben- oder spiralförmige metallische Torsionsfeder (1c) ist.

4. Bodenbearbeitungsvorrichtung nach Anspruch 1, **dadurch gekennzeichnet, dass** das Torsionselement eine mit Elastomer umschlossene schrauben- oder spiralförmige metallische Torsionsfeder ist.

5. Bodenbearbeitungsvorrichtung nach einem der Ansprüche 1 bis 4, **dadurch gekennzeichnet, dass** das Führungselement (4) längs einer an dem Maschinenrahmen (23) befestigten Führung (11) geführt ist.

6. Bodenbearbeitungsvorrichtung nach Anspruch 5, **dadurch gekennzeichnet, dass** der Winkel der Führung (11) in einer in Fahrtrichtung verlaufenden Vertikalebene zum Einstellen eines Einstechwinkels für die Stichwerkzeuge (3) verstellbar ist.

7. Bodenbearbeitungsvorrichtung nach Anspruch 6, **dadurch gekennzeichnet, dass** der Winkel der linearen Führung (11) relativ zum Maschinenrahmen (23) zum Einstellen eines Einstechwinkels zentral verstellbar ist.

8. Bodenbearbeitungsvorrichtung nach einem der vorherigen Ansprüche, **dadurch gekennzeichnet, dass** mindestens zwei Reihen (18, 19) von Stechwerkzeugen oder Gruppen von Stechwerkzeugen in Fahrtrichtung hintereinander angeordnet sind.

9. Bodenbearbeitungsvorrichtung nach den Ansprüchen 1 bis 4, **dadurch gekennzeichnet, dass** das Führungselement (4) ein Tragarm ist, der in einem zweiten Schwenklager (22) an dem Maschinenrahmen (23) schwenkbar befestigt ist.

10. Bodenbearbeitungsvorrichtung nach einem der vorherigen Ansprüche, **dadurch gekennzeichnet, dass** mehrere Stechwerkzeuge (3) oder mehrere Gruppen von Stechwerkzeugen (3) nebeneinander angeordnet sind.

11. Bodenbearbeitungsvorrichtung nach Anspruch 10, **dadurch gekennzeichnet, dass** die nebeneinander angeordneten Stechwerkzeuge (3) oder Gruppen von Stechwerkzeugen (3) zueinander phasenverschoben antreibantreibbar sind.

12. Bodenbearbeitungsvorrichtung nach einem der vorherigen Ansprüche, **dadurch gekennzeichnet, dass** eine zentrale Verstelleinrichtung für den Einstechwinkel der Stechwerkzeuge (3) mit mindestens einem zentral verstellbaren Anschlag (24) vorgesehen ist, wobei der mindestens eine Anschlag (24) am Maschinenrahmen (23) befestigt ist und die Bewegung der Stechwerkzeuge (3) aufgrund des Rückstellmomentes zurück in die Ausgangslage begrenzt.

13. Bodenbearbeitungsvorrichtung nach Anspruch 12, **dadurch gekennzeichnet, dass** mindestens ein Kopplungsarm (25) an dem Werkzeughalter (2) schwenkbar gelagert ist, der vor dem Einstechen in den Boden mit dem Anschlag (24) in direktem Kontakt ist und an dem Werkzeughalter (2) entfernten Ende an einem Zwischenelement (26) schwenkbar gelagert ist, das seinerseits an dem Maschinenrahmen (23) schwenkbar gelagert ist.

14. Bodenbearbeitungsvorrichtung nach eine der Ansprüche 1 bis 13, **dadurch gekennzeichnet, dass** die Höhe des Hubs, den das Führungselement (4) ausführt, einstellbar ist.

15. Bodenbearbeitungsvorrichtung nach einem der Ansprüche 1-12, **dadurch gekennzeichnet, dass** das Führungselement (4',4") zweiteilig ausgebildet ist, wobei das obere Führungselement (4') mit dem Antrieb (17) gekoppelt ist, und das untere Führungselement (4") den Werkzeughalter (2) trägt, wobei zwischen dem oberen und dem unteren Führungselement (4',4") mindestens eine Druckfeder (21) angeordnet ist die ein Einstechen des mindestens einen Stechwerkzeugs (3) bei einem normalen Bodenwiderstand ermöglicht und ein Einfedern des Stechwerkzeugs (3) ermöglicht, wenn der Bodenwiderstand erheblich höher ist als ein normaler Bodenwiderstand.
